Europäisches Patentamt

European Patent Office

Office européen des brevets

(11) Publication number: **0 092 377**
**A2**

# EUROPEAN PATENT APPLICATION

(21) Application number: 83302096.9

(22) Date of filing: 14.04.83

(51) Int. Cl.³: **G 05 B 19/405**

(30) Priority: 16.04.82 JP 63307/82

(43) Date of publication of application: 26.10.83
Bulletin 83/43

(84) Designated Contracting States: **DE FR GB**

(71) Applicant: **FANUC LTD, 5-1, Asahigaoka 3-chome
Hino-shi, Tokyo 191 (JP)**

(72) Inventor: **Nozawa, Ryoichiro, 12-1-2105, Sarugaku-cho,
Shibuya-ku Tokyo (JP)**
Inventor: **Kawamura, Hideaki, 1375-5, Narahara-cho,
Hachioji-shi Tokyo (JP)**
Inventor: **Ohtsuki, Toshiaki, 5867, Hino, Hino-shi Tokyo
(JP)**

(74) Representative: **Billington, Lawrence Emlyn et al,
HASELTINE LAKE & CO Hazlitt House 28 Southampton
Buildings Chancery Lane, London WC2A 1AT (GB)**

(54) Numerical control system.

(57) A numerical control system of the type wherein a workpiece
is machined as commanded by executing processing specified
by a custom macro. A custom macro composed of at least a
custom macro identification and an instruction using variables is
stored beforehand in a memory (106), a custom macro call
instruction calling the custom macro, and the custom macro
identification, are inserted beforehand in a numerical control
machining program, the custom macro having the custom macro
identification is read out of the memory (106), processing is
executed based on the custom macro, identifiers (see 108) are
attached to the variables (see 107) to name them, and both the
identifiers and actual values assigned to the variables named by
the identifiers are displayed on a display unit (110).

ACTORUM AG

## NUMERICAL CONTROL SYSTEM

This invention relates to a system for displaying variables in a numerical control apparatus.

The method adopted most widely for creating numerical control programs in recent numerical control systems relies upon subprograms and so-called custom macro functions. A custom macro is a function, composed of a group of instructions, that is previously registered in memory just as a subprogram would be. The registered function is represented by a single instruction inserted in the numerical control program in advance, and the operation specified by the function is executed when the instruction, referred to as a macro call instruction, is eventually read from the numerical control program. The chief advantages of the custom macro are (a) unlike a subprogram, variables can be used in the macro, (b) arithmetic operations among the variables are possible, these being referred to as inter-variable calculations, and (c) the variables can be set to actual numerical values.

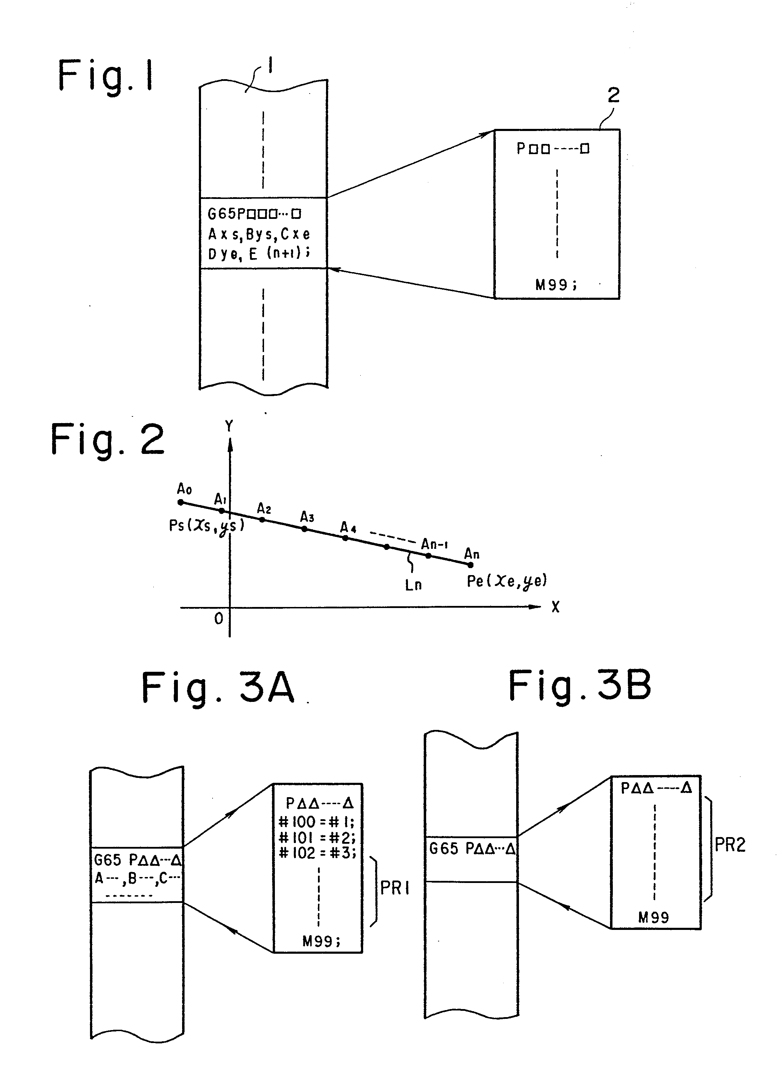

Fig. 1 is an explantory view useful in describing the relation between an ordinary numerical control (NC) program, indicated at numeral 1, and a custom macro shown at numeral 2. It will be seen that a macro call instruction has been inserted in the NC program at a suitable location. The instruction is given by:

$$G65 \ P\square\ \square\ \square\cdots\ \square\ Ax_s \ By_s \ Cx_e \ Dy_e \ E(n+1); \ .\ .\ .\ (A)$$

Here G65 indicates that the instruction is a macro call instruction, $P\square\ \square\ \square\cdots\square$ indicates the name, or identification, of the custom macro, and A, B, C, D and E are word addresses which specify the actual values of variables used in the custom macro $P\square\ \square\ \square\cdots\square$. The correspondence between a word address and a variable in the custom macro is stored beforehand in an internal memory of the numerical control apparatus. For example, A, B, C, D and E might correspond to variables #1, #2, #3, #7 and #9, respectively. The custom macro 2 is programmed using the variables #1, #2, #3, #7, #9, etc. for forming bolt holes in a workpiece at (n+1)-number of equidistantly spaced positions Ao, Al, A2,... An located on a straight line L connecting a starting point $P_s(x_s,y_s)$ and end point $P_e(x_e,y_e)$, as shown in Fig. 2. An instruction M99 is inserted at the end of the custom macro to effect the return to the NC program 1.

When the custom macro call instruction given by (A) shown above is read during the course of processing executed based on the NC program, the numerical control apparatus calls the custom macro 2 corresponding to the

macro identification $P\square\square\square\ldots\square$ and executes processing for the machining of the bolt holes shown in Fig. 2 by setting the variables in the custom macro to the values specified in the call instruction, i.e., #1 = $x_s$, #2 = $y_s$, #3 = $x_e$, #7 = $y_e$, #9 = (n+1). After completing the machining processing, the NC apparatus reads M99 and returns to processing based on the NC program 1. The actual numerical values for the variables can be specified by (a) using the abovementioned word addresses, or (b) assigning the numerical values to the variables directly by keying in numbers from a manual data input (MDI) unit.

Thus, NC machining processing conforming to predetermined patterns can be executed by previously registering a custom macro in a memory, and inserting the custom macro call instruction G65 in the NC program, followed by the custom macro identification and the values which specify the variables.

The above-described macro function is extremely useful because specialized processing tailored to the particular needs of the user can be executed without modifying the system software of the NC apparatus. For this reason, the custom macro function is being used in the application of NC techniques to grinding machines and the like. A grinding machine has a number of digital switches for presetting various items of data such as depth of cut and grinding speed on the basis of which grinding is performed. Numerically controlling such a grinding machine through use of custom macros involves (a) expressing data necessary for grinding, such as rough cutting depth, fine cutting depth and grinding speed, in the form of variables #i, #j, #k... (where i, j, k... are prescribed numerical values), (b) creating a grinding program using these variables, (c) attaching an identification to the beginning of the created grinding program and the instruction M99 to the end thereof and then registering the program in memory as a custom macro, (d) inserting the custom macro call instruction G65 in the NC program at a suitable location thereof, followed by the custom macro identification and an instruction assigning actual numbers to each of the variables #i, #j, #k..., and (e) executing grinding in accordance with the registered custom macro using the numerical values actually assigned. The numerical values can be assigned by keying in and storing them through use of the abovementioned MDI unit.

Fig. 3 shows the relationship between an NC program for controlling a grinding operation, and the user macro described above. Fine cutting depth, rough cutting depth and grinding speed are indicated by variables #100, #101 and #102, respectively. In the example of Fig. 3A, actual numerical values (fine cutting depth, rough cutting depth, grinding speed,...) are assigned to variables #1, #2, #3,... by word addresses A, B, C, respectively, and instructions which establish the conditions $\#100 = \#1$, $\#101 = \#2$, $\#102 = \#3$ are inserted in the custom macro, whereby the fine cutting depth, rough cutting depth and grinding speed are represented by the variables $\#100$, $\#101$ and $\#102$, respectively. The group of instructions PR1 is a grinding program formed by the variables $\#100$, $\#101$, $\#102$, ... and so on. In the example of Fig. 3B, the fine cutting depth, rough cutting depth and grinding speed are assigned to the variables $\#100$, $\#101$, $\#102$... directly from an MDI unit, the values being stored in memory upon being entered. The grinding program PR2 has exactly the same construction as the grinding program PR1 in Fig. 3A.

With a manual-type grinding machine, various items of data are set by the digital switches mentioned earlier so that the operator need only observe the switch settings to read, say, the rough and fine cutting depths and the grinding speed. In order to perform grinding under numerical control by expressing items of grinding data by means of the variables $\#i$, $\#j$, $\#k$, ..., however, the operator cannot verify the cutting depth and grinding speed values visually. The result is a grinding operation of poor operability.

According to one aspect of the present invention there is provided a numerical control method wherein a workpiece is machined as commanded by executing processing specified by a custom macro, wherein a custom macro composed of at least a custom macro identification and an instruction using a variable is stored beforehand in a memory, a custom macro call instruction calling the custom macro, and the custom macro identification, are inserted beforehand in a numerical control machining program, the custom macro having said custom macro identification is read out of the memory, and said processing is executed based on the custom macro, said method comprising the steps of:

assigning an actual value to the variable;

entering a variable identifier for identifying the variable ; and

displaying on display means a corresponding relationship between the variable identifier and the actual value assigned to the variable.

According to another aspect of the present invention there is provided a numerical control apparatus wherein in use a workpiece is machined as commanded by executing processing specified by a custom macro, wherein a custom macro composed of at least a custom macro identification and an instruction using a variable is stored beforehand in a memory, a custom macro call instruction calling the custom macro, and the custom macro identification, are inserted beforehand in a numerical control machining program, the custom macro having said custom macro identification is read out of the memory, and said processing is executed based on the custom macro, said apparatus comprising:

input means for entering a corresponding relationship between the variable and a variable identifier attached to said variable for the identification thereof; means for assigning an actual value to the variable ;

means for establishing a corresponding relationship between the variable identifier and the actual value; and

display means for displaying the corresponding relationship established between the variable identifier and the actual value.

An embodiment of the present invention may provide a system for displaying variables in a numerical control apparatus, wherein the identifiers of variables used in a custom macro and the actual numbers assigned to the variables can be displayed on a display unit.

An embodiment of the present invention may provide a system for displaying variables, wherein a display unit presents a display of such grinding data as cutting depth and grinding speed effective in a grinding machine that is numerically controlled through use of custom macros.

An embodiment of the present invention may provide a system for displaying variables, wherein correspondence between variables and variable identifiers can be established and stored in memory in a simple manner.

A preferred embodiment of the present invention provides a numerical control system of the type that machines a workpiece by executing processing based on a custom macro. Actual values are assigned to the variables used in the custom macro, identifiers are entered for naming the variables, corresponding relationships are established between the variable identifiers and the actual values which have been assigned to the variables, and the relationships are displayed on the screen of a CRT for operator confirmation. Thus the identifier, which is the name of a variable spelled out in ordinary language, such as "FINE CUTTING DEPTH", and the desired value assigned thereto, appear side by side on the display screen.

Means are provided allowing the operator to enter the actual values manually, rather than programming them into the NC program, and for entering a display request signal to display the entered actual values alongside the corresponding identifiers for easy confirmation.

Features and advantages of an embodiment of the present invention will be apparent from the following description taken in conjunction with the accompanying drawings, in which like reference characters designate the same or similar parts throughout the figures thereof.

## BRIEF DESCRIPTION OF THE DRAWINGS

Fig. 1 is an explantory view useful in describing the relationship between a numerical control program and a custom macro;

Fig. 2 is a graphical representation useful in describing the contents of a custom macro;

Figs. 3A and 3B are explanatory views useful in describing the relationship between a numerical control program and custom macro which can be applied to a numerically controlled grinding machine;

Fig. 4 is a block diagram illustrating an embodiment of the present invention;

Fig. 5 is a block diagram illustrating a display unit; and

Figs. 6 and 7 are views illustrating examples of displays which appear on the display unit of Fig. 5.

## DESCRIPTION OF THE PREFERRED EMBODIMENT

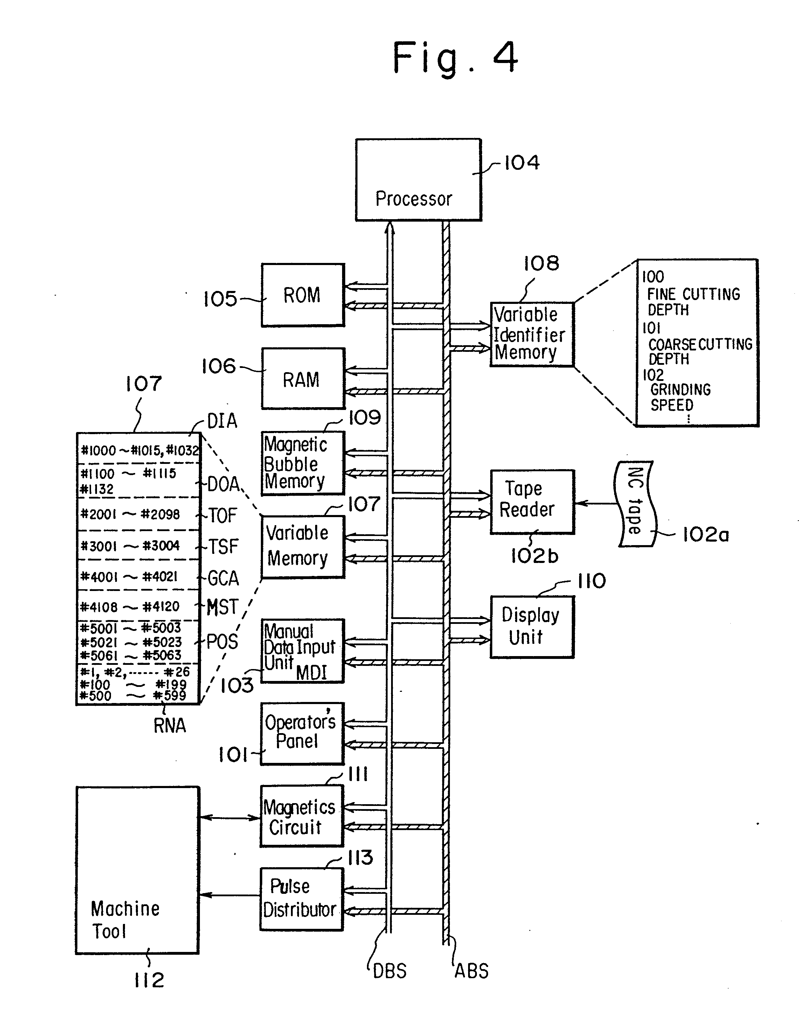

Reference will now be had to the block diagram of Fig 4 to describe an embodiment of the present invention. The system includes an operator's panel 101 having a mode selection switch, not shown, a tape reader 102b and a manual data input unit (MDI) 103. When the operator sets the mode selection switch to an edit mode or memory mode, loads an NC tape 102a into the tape reader 102b and presses a read button on the MDI 103, the tape reader 102b reads the NC data from the NC tape 102a in successive fashion. (We shall assume that a program identification has been attached to the beginning of the NC program and to the custom macro employed in the system.) A processor 104, under the control of a control program stored in a read-only memory (ROM) 105, reads in the NC data acquired from the tape 102a via the tape reader 102b, and stores the data in a random accesss memory (RAM) 106. The foregoing operation continues until the entire NC program and custom macro necessary for grinding are stored in the RAM 106.

A variable memory 107 has storage locations each of which corresponds to a variable number. Each storage location stores an actual value assigned to a variable having a variable number which corresponds to that location. Specifically, the variable memory 107 includes an input signal storage area DIA, an output signal storage area DOA, a tool offset storage area TOF, a control information storage area TSF, a modal information storage area GCA, an auxiliary function instruction storage area MST, a position storage area POS, and a storage area RNA for storing actual values assigned to variables used in a custom macro. Each of these areas includes a plurality of the storage locations mentioned above. The input signal storage area DIA and output signal storage area DOA store actual values of input and output signals, respectively, expressed in terms of a plurality of variables. Likewise, the tool offset storage area TOF stores actual values of tool offset quantities expressed in terms of a plurality of variables. The control information storage area TSF stores actual values (logical "1" or "0") of items of control information expressed by variables, the modal information storage area GCA stores actual values ("1" or "0") of items of modal information such as G-function instructions expressed in terms of variables, the auxiliary function storage area MST stores actual values ("1" or "0") of M-, S- and T-function instructions expressed by variables, and the position storage area POS stores actual values of machine position expressed in by variables. The storage area RNA stores actual values of variables which are expressed in terms of variables and used in a custom macro. By way of example, fine cutting depth, rough cutting depth, grinding speed,..., which apply in grinding work, are expressed by variables #100, #101, #102,...,

respectively, and the actual values of the fine cutting depth, rough cutting depth and grinding speed, etc., are $c_1$, c2 and $v_1$, respectively. The actual values $c_1$, $c_2$, $v_1$... will therefore be stored at respective locations corresponding to the variable numbers 100, 101, 102,... in the storage area RNA.

A variable identifier memory 108 stores the relationship between variable numbers and variable identifiers. In other words, if identifiers "FINE CUTTING DEPTH", "COARSE CUTTING DEPTH" and "GRINDING SPEED" are attached to variables #100, #101 and #102, respectively, the variable identifier memory 108 will store these relationships in the manner shown in Fig. 4. These relationships between variable numbers and identifiers can be entered by the operator manually using the MDI unit 103 or operator's panel 101, or by a programmed instruction. In the latter case, programming the instruction given by, say:

SETVN 100 [FINE CUTTING DEPTH, COARSE CUTTING DEPTH, GRINDING SPEED, ...] . . . . . . . . (B) will identify the variable numbers #100, #101, #102 by "FINE CUTTING DEPTH", "COARSE CUTTING DEPTH", "GRINDING SPEED", respectively. When the above command (B) is entered from the program, a processor 104, under the control of a control program, regards the numerical value 100 following the instruction "SETVN" as the initial variable number, successively increments the variable number to obtain the variable numbers #101,

#102..., successively establishes correspondence between the first variable and the first identifier, the second variable and second identifier and so on, and stores the corresponding relationships in the variable identifier memory 108.

A magnetic bubble memory 109, which is non-volatile, stores such data as the various set parameters, the NC program, custom macros and the data stored in the variable memory 107 and variable identifier memory 108, thereby preserving these items of data in the event of a loss of power. In addition, the bubble memory 109 stores the correspondence between the variables (#1, #2, #3...) used in a custom macro and the word addresses (A, B, C...) specifying the actual values of these variables. When power is introduced to the system, the contents of the bubble memory 109 are read by the processor 104 and transferred by the processor to the RAM 106, variable memory 107 and variable identifier memory 108.

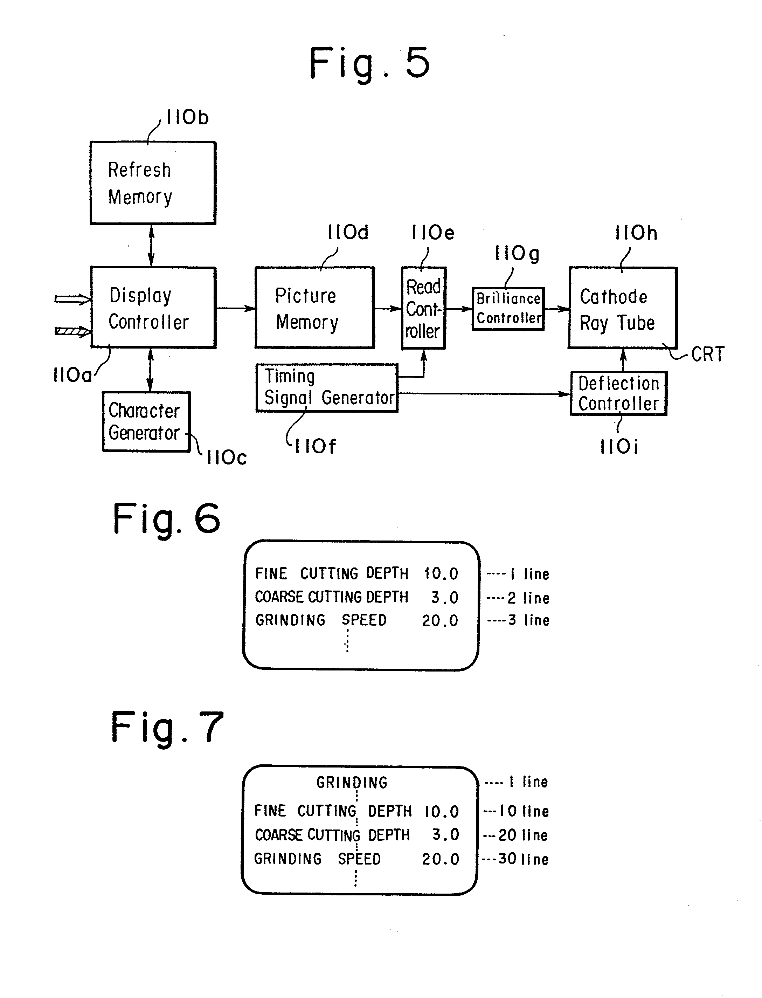

A display unit 110 is adapted to display the corresponding relationships between variable identifiers and actual numerical values, in addition to the data in the NC program and the present position of a movable machine element, such as a tool or table. For example, when the foregoing identifiers are assigned to variables as described above, the display unit 109 displays the identifiers "FINE CUTTING DEPTH", "COARSE CUTTING DEPTH", "GRINDING SPEED"... in successive fashion, as shown in Fig. 6, followed alongside by actual values 10.0, 3.0, 20..., which are located in memory.

The construction of the display unit 110 is shown in the block diagram of Fig. 5. The display unit 110 includes a display controller 110a comprising a computer connected to the data bus DBS and address bus ABS of the NC apparatus. When the operator presses a display key (not shown) on the MDI unit 103 to generate a request signal for display of variables, the processor 104 is instructed by the control program to obtain the corresponding relationships between variable identifiers and actual values by using the correspondence between variable numbers and actual values stored in the storage area RNA of the variable memory 107 as well as the correspondence between variable numbers and variable identifiers stored in the variable identifier memory 108, and to supply the display controller 110a with the data indicative of the obtained corresponding relationships between the variable identifiers and actual values. The display controller 110a converts each item of correspondence data into picture information and writes the information into a refresh memory 110b. The display controller 110a subsequently reads the items of picture data out of the refresh memory 110b in successive fashion and, when a read item of information is character information, the controller reads a corresponding character pattern out of a character generator 110c and writes it into a picture memory 110d. When all of the character information has been converted into character patterns and the patterns have been stored in the picture memory 110d by the foregoing processing, the contents of the picture memory 110d will be indicative of a picture for displaying the correspondence between variable identifiers and actual values. The output side of the memory 110d is connected to the input side of a read controller 110e, which also receives a timing signal (horizontal and vertical) generated by a timing signal generator 105f. The read controller 110e scans (raster scans) the contents of the picture memory 110d in synchronization with the timing signal, and applies the information obtained by the scanning operation to a brilliance controller 110g. The brilliance controller 110g, based on the information input thereto, regulates the cathode voltage· of a cathode ray tube 110h to modulate the brilliance thereof. Concurrent with the foregoing brilliance modulation operation, a deflection controller 110i applies a horizontal and vertical deflection to the CRT beam in synchronization with the timing signal from the timing signal generator 110f. The result is that the CRT 110h displays the corresponding relationships between the variable identifiers and actual values, as illustrated in Fig. 6.

Returning to Fig. 4, a magnetics circuit 111 supervises the exchange of data between the NC apparatus and a machine tool 112 provided with limit switches and relays. Specifically, the magnetics circuit 111 sends signals indicative of M-, S- and T-function instructions to the machine tool 112 when these instructions are read in from the NC tape 102a, and informs the NC apparatus of the state (i.e., on or off) of the various switches and relays on the machine tool side. When the NC data in the NC program is path data, a pulse distributor 113 performs an arithmetic pulse distribution operation based on the path data to generate distributed pulses that are applied to servo circuitry (not shown) for driving servo motors.

In operation, assume that an NC program and custom macro have been registered in the RAM 106. The operator selects the memory mode by using the mode selection switch on the operator's panel, enters the number of the prescribed NC program using the MDI unit 103, and presses a start button on the operator's panel. When this is done, the processor 104 is instructed by the control program to go to the beginning of the NC program having the entered NC program number, read the NC data in block-by-block fashion from the beginning of the NC program and execute NC processing based on the NC data. When the NC data is an M-, S- or T-function instruction, the processor 104 sends a signal indicative of the instruction to the machine tool 112 through the magnetics circuit 111. If the NC data is path data, the path followed by the movable element of the machine tool is controlled based on the path data. Assume that the commanded data is path data for cutting along a straight line, and that the commanded incremental values for such a cutting operation are given by Xi, Yi. The processor 104 proceeds to store these values in the RAM 106 as remaining amounts of movement XR, YR, respectively, and performs the following operations to compute X- and Y-axis amounts of movement $\Delta X$, $\Delta Y$ to be traversed during a predetermined length of time $\Delta T$:

$$\Delta X = Fx \cdot \Delta T \quad \ldots \ldots \ldots \quad (1)$$

$$\Delta Y = Fy \cdot \Delta T \quad \ldots \ldots \ldots \quad (2)$$

The values of $\Delta X$ and $\Delta Y$ are stored in a storage area of the RAM 106 and are fed into the pulse distributor 113. Note that the period of $\Delta T$ in the foregoing equations is a quantity preset as a parameter. Further, Fx, Fy are the feed speeds along the X and Y axes, respectively, and are decided by the following equations in which F is the commanded feed speed:

$$Fx = F \cdot Xi / \sqrt{Xi^2 + Yi^2} \quad \ldots \ldots \quad (3)$$

$$Fy = F \cdot Yi / \sqrt{Xi^2 + Yi^2} \quad \ldots \ldots \quad (4)$$

Upon receiving the $\Delta X$, $\Delta Y$ inputs, the pulse distributor 113 executes a linear interpolation simultaneously along the X and Y axes. With each lapse of the time $\Delta T$, the processor 104 computes values of $\Delta X$, $\Delta Y$ anew and accumulates the resulting values along the respective axes. In other words, the processor 104 executes the operations given by:

$$XA + _\Delta X \longrightarrow XA \quad\quad . \ . \ . \ . \ . \ (5)$$

$$YA + _\Delta Y \longrightarrow YA \quad\quad . \ . \ . \ . \ . \ (6)$$

to update the coordinates XA, YA of the current position occupied by the movable element of the machine tool, which coordinates are then stored in the RAM 106. The processor 104 also performs the following operations with each lapse of the time $_\Delta T$:

$$XR - _\Delta X \longrightarrow XR \quad\quad . \ . \ . \ . \ . \ (7)$$

$$YR - _\Delta Y \longrightarrow YR \quad\quad . \ . \ . \ . \ . \ (8)$$

to update the remaining amounts of movement stored in the RAM 106. When the processor 104 senses that the conditions $XR \geq _\Delta X$, $YR \geq _\Delta Y$ hold, namely that the remaining amounts of movement XR, YR along the X and Y axes are equal to or greater than the incremental values $_\Delta X$, $_\Delta Y$, respectively, $_\Delta X$, $_\Delta Y$ are applied to the pulse distributor 113. On the other hand, if it is sensed that the conditions $XR < _\Delta X$, $YR < _\Delta Y$ hold, then XR and YR are applied to the pulse distributor 113. The movable machine element is thus moved to the target position. When the element arrives at the target position (i.e. XR=0, YR=0), the processor 104 reads the next block of NC data out of the RAM 106 and then performs the proceeds to execute control processing just as described above.

After repeating the foregoing process steps, the processor 104 reads the following instruction (Fig. 3A) from the RAM 106:

G65 P□ □...□ A3.0 B10.0 C20.0; . . . (C)

When this occurs, the processor 104 then reads the NC data from the beginning of the custom macro named P□ □..□ and stored in the RAM 106, and executes the NC processing prescribed. Meanwhile, the processor 104 goes to the RAM 106 to obtain the correspondence between the word addresses (A, B, C...) and variables (#1, #2, #3...) and, based on the NC data in (C) above, establishes the following corresponding relationships between the variables and actual values:

$$\#1 = 3.0, \quad \#2 = 10.0, \quad \#3 = 20.0...$$

The processor 104 also performs the following operations based on the instructions in the custom macro:

$$\#100 = 3.0, \quad \#101 = 10.0, \quad \#102 = 20.0...$$

At the end of NC processing based on the custom macro, the processor 104 reads the last instruction "M99" in the custom macro to resume processing in accordance with the NC program.

The foregoing is an example wherein actual values for the variables are appointed by the word addresses. Alternatively, however, the operator can assign actual values to the variables #100, #101, #102... in advance and load these values into the RAM 106 manually through use of the MDI unit 103. The manual setting operation is performed by (a) pressing a SET key (not shown) on the MDI unit 103, (b) displaying, on the CRT of the display unit 110, the contents (the corresponding relationships between variables and actual values) of the storage area RNA of variable memory 107, (c) positioning a cursor at a prescribed variable, and (d) subsequently entering the actual value corresponding to the variable designated by the cursor. When the operator wishes to actually see the values set for rough cutting depth, fine cutting depth, grinding speed and the like in parallel with the foregoing processing, he need only press the variable display key on the MDI unit 103 to have the display unit 110 present a display of variable identifiers and the corresponding set values, as described above. What the operator sees is as shown in Fig. 6.

In the example of Fig. 6, identifiers and their corresponding set values are displayed side by side in line-by-line fashion and in regular order starting from the top of the screen. Alternatively, however, the positions on the screen at which these items of information are displayed can be entered through the program. For example, by entering the following instruction:

SCRN [1, GRINDING, 10, FINE CUTTING DEPTH, 20, CUTTING DEPTH, 30, GRINDING SPEED...]. . . (D) "GRINDING" can be displayed on the first line of the display screen (i.e., at the first screen address) and, likewise, "FINE CUTTING DEPTH", "COARSE CUTTING DEPTH", "GRINDING SPEED"..., and the set values corresponding thereto, can be displayed on the 10th, 20th, 30th...

lines of the display screen, respectively.  The display is as shown in Fig. 7.

The embodiment of the present invention as described and illustrated hereinabove thus provides a numerical control system of greatly improved operability by making is possible to display the identifiers and actual numerical values assigned to the variables used in a custom macro.

As many apparently widely different embodiments of the present invention can be made without departing from the spirit and scope thereof, it is to be understood that the invention is not limited to the specific embodiments thereof except as defined in the appended claims.

0092377

## CLAIMS

1. A numerical control method wherein a workpiece is machined as commanded by executing processing specified by a custom macro, wherein a custom macro composed of at least a custom macro identification and an instruction using a variable is stored beforehand in a memory, a custom macro call instruction calling the custom macro, and the custom macro identification, are inserted beforehand in a numerical control machining program, the custom macro having said custom macro identification is read out of the memory, and said processing is executed based on the custom macro, said method comprising the steps of:

assigning an actual value to the variable;

entering a variable identifier for identifying the variable; and

displaying on display means a corresponding relationship between the variable identifier and the actual value assigned to the variable.

2. The method according to claim 1, wherein an actual value is assigned to the variable in a block which is the same block containing the custom macro.

3. The method according to claim 1, wherein input means are provided for entering the actual value and for assigning said value to the variable.

4. The method according to claim 1, wherein a variable memory is provided for storing a corresponding relationship between the variable and the actual value.

5. The method according to claim 4, wherein a variable identifier memory is provided for storing a corresponding relationship between the variable and the variable identifier.

6. The method according to claim 5, wherein the corresponding relationship between the variable identifier and the actual value is obtained, and displayed on the display means, from said corresponding relationships between the variable and the actual value and between the variable and the variable identifier.

7. The method according to claim 6, wherein the corresponding relationship between the variable identifier and the actual value is displayed on the display means when there is a request for said corresponding relationship to be displayed.

8. A numerical control apparatus wherein in use a workpiece is machined as commanded by executing processing specified by a custom macro, wherein a custom macro composed of at least a custom macro identification and an instruction using a variable is stored beforehand in a memory, a custom macro call instruction calling the custom macro, and the custom macro identification, are inserted beforehand in a numerical control machining program, the custom macro having said custom macro identification is read out of the memory, and said processing is executed based on the custom macro, said apparatus comprising:

    input means for entering a corresponding relationship between the variable and a variable identifier attached to said variable for the identification thereof;

means for assigning an actual value to the variable;

means for establishing a corresponding relationship between the variable identifier and the actual value; and

display means for displaying the corresponding relationship established between the variable identifier and the actual value.

9. The apparatus according to claim 8, further comprising a variable memory for storing a corresponding relationship between the variable and the actual value.

10. The apparatus according to claim 9, further comprising a variable identifier memory for storing a corresponding relationship between the variable and the variable identifier.

11. The apparatus according to claim 10, further comprising display request means for requesting display of the corresponding relationship between the variable identifier and the actual value.

**Fig. 1**

```
G65P□□□…□
A x s, B y s, C x e
D y e, E (n+1);
```

```
P□□----□


M99;
```

**Fig. 2**

**Fig. 3A**

```
G65 P△△…△
A---, B---, C---
- - - - - - -
```

```
P△△----△
#100=#1;
#101=#2;
#102=#3;


M99;
```
PR1

**Fig. 3B**

```
G65 P△△…△
```

```
P△△----△


M99
```
PR2

# Fig. 4

Processor ~104

105 — ROM

106 — RAM

107

| DIA | #1000 ~ #1015, #1032 |
| DOA | #1100 ~ #1115 #1132 |
| TOF | #2001 ~ #2098 |
| TSF | #3001 ~ #3004 |
| GCA | #4001 ~ #4021 |
| MST | #4108 ~ #4120 |
| POS | #5001 ~ #5003 #5021 ~ #5023 #5061 ~ #5063 |
| | #1, #2, ------ #26 #100 ~ #199 #500 ~ #599 |

RNA

109

Magnetic Bubble Memory

107

Variable Memory

103

Manual Data Input Unit MDI

101

Operator's Panel

111

Magnetics Circuit

113

Pulse Distributor

108

Variable Identifier Memory

100 FINE CUTTING DEPTH
101 COARSE CUTTING DEPTH
102 GRINDING SPEED
.

Tape Reader

NC tape ~ 102a

102b

110

Display Unit

Machine Tool

112

DBS    ABS

# Fig. 5

# Fig. 6

```
FINE  CUTTING DEPTH   10.0   ----1 line
COARSE CUTTING DEPTH   3.0   ----2 line
GRINDING  SPEED       20.0   ----3 line
                :
```

# Fig. 7

```
         GRINDING          ---- 1 line
FINE  CUTTING DEPTH  10.0   ---10 line
COARSE CUTTING DEPTH  3.0   ---20 line
GRINDING  SPEED      20.0   ---30 line
                :
```